# FASCICULE DE BREVET EUROPEEN

(11) **EP 3 638 570 B1**
(45) Date de publication et mention de la délivrance du brevet: **18.01.2023**
(21) Numéro de dépôt: 18736979.8
(22) Date de dépôt: 22.05.2018
(51) Int. Cl.: B62D 25/20, B60K 1/04

(54) **VEHICULE AUTOMOBILE AVEC BATTERIES DE TRACTION DERRIERE LA PLANCHE A TALON RENFORCÉE**
KRAFTFAHRZEUG MIT TRAKTIONSBATTERIEN HINTER DER VERSTÄRKTEN HECKPLATTE
MOTOR VEHICLE WITH TRACTION BATTERIES BEHIND THE REINFORCED HEEL BOARD

(30) Priorité: 15.06.2017 FR 1755406
(43) Date de publication de la demande: 22.04.2020
(73) Titulaire: PSA Automobiles SA, 78300 Poissy (FR)
(72) Inventeur: JEUNE, Christelle, 25250 Sourans (FR); MERESSE, Ludovic, 25750 Arcey (FR); FOURNAISE, Eddy, 25750 Arcey (FR)
(86) Numéro de dépôt international: PCT/FR2018/051218
(87) Numéro de publication internationale: WO 2018/229375

(56) Documents cités:
- FR-A1- 3 026 682
- FR-A1- 3 026 712
- JP-A- H10 203 423

## Description

L'invention a trait au domaine des véhicules automobiles, plus particulièrement à la zone arrière de la planche à talon d'un véhicule automobile et à son comportement lors d'un choc latéral.

Le document de brevet publié FR 3 026 712 A1 divulgue une planche à talon renforcée au moyen de trois renforts, à savoir deux renforts latéraux et un renfort central. Les renforts latéraux s'étendent depuis les bords latéraux de la planche à talon en direction de la partie centrale de ladite planche à talon, et le renfort central s'étend entre les deux renforts latéraux. Ces renforts sont destinés à améliorer le comportement du véhicule en cas de choc latéral sans pour autant l'alourdir exagérément. Ils manquent cependant de renforcer de manière satisfaisante le véhicule en cas de choc latéral lorsque des batteries de traction sont logées sous le plancher d'assise, à l'arrière de la planche à talon. Le document FR3026682 divulgue une conception de planche à talon avec une portion centrale et deux portions d'extrémité disposées de part en d'autre de la partie centrale.

L'invention a pour objectif de pallier au moins un des inconvénients de l'état de la technique susmentionné. Plus particulièrement, l'invention a pour objectif de renforcer la planche à talon afin de limiter la déformation du véhicule et, partant, les efforts portés sur des batteries de traction disposées sous le plancher d'assise en cas de choc latéral.

L'invention a pour objet un véhicule automobile comprenant une planche à talon s'étendant transversalement entre deux profilés longitudinaux latéraux formant des bas de caisse ; et un profilé de renfort disposé transversalement sur la planche à talon ; remarquable en ce que le profilé de renfort comprend une portion centrale horizontale et deux portions d'extrémité inclinées vers le bas par rapport à ladite portion centrale. Le véhicule comprend deux longeronnets arrière s'étendant chacun vers l'avant le long d'un des profilés longitudinaux latéraux au-delà de la planche à talon. Chacune des portions d'extrémité du profilé de renfort présente une extrémité libre située en vis-à-vis d'un des longeronnets, verticalement à une position médiane dudit longeronnet. Le véhicule comprend, en outre, une barre transversale de renfort fixée aux longeronnets et située à l'arrière de la planche à talon.

Les notions d'orientation sont exprimées lorsque le véhicule est en position normale de fonctionnement.

Avantageusement, le renfort est en matériau métallique et plus préférentiellement en acier. Avantageusement, le renfort s'étend d'un des profilés longitudinaux latéraux à l'autre sur toute la longueur de la planche à talon.

Selon un mode avantageux de l'invention, chacune des deux portions d'extrémité est inclinée par rapport à la portion centrale d'un angle α supérieur à 10° et/ou inférieur à 30°.

Avantageusement, l'angle α est compris entre 15° et 25°.

Selon un mode avantageux de l'invention, la barre transversale comprend un profilé rectiligne de section fermée et deux pattes de fixation aux extrémités dudit profilé, chacune desdites pattes étant fixées sur une face inférieure d'un des longeronnets.

Avantageusement, le profilé rectiligne de la barre transversale a une section trapézoïdale, ladite barre transversale étant préférentiellement fabriquée en matériau métallique et plus préférentiellement en acier. L'épaisseur de paroi du profilé rectiligne peut être comprise entre 1 et 3mm. La barre transversale peut également comprendre une ou plusieurs pièces de soutien comprenant une portion centrale et des pattes de fixation, les pattes de fixation étant préférentiellement au nombre de trois et aptes à fixer la pièce sur un plancher arrière au niveau du coffre arrière. Ces pièces de soutien servent à supporter la barre transversale.

Selon un mode avantageux de l'invention, la planche à talon présente une encoche alignée avec un tunnel central du véhicule, la portion centrale horizontale du profilé de renfort s'étendant au-dessus de ladite encoche.

Selon un mode avantageux de l'invention, la section transversale du profilé de renfort comprend une portion creuse et deux semelles de part et d'autre de ladite portion, lesdites semelles étant fixées par soudure à la planche à talon.

Avantageusement, la portion creuse du profilé de renfort est l'unique portion creuse du profilé.

Avantageusement, la soudure fixant le profilé de renfort à la planche à talon est du type soudage électrique par résistance comprenant des points de soudure répartis de long des semelles du profilé de renfort.

Selon un mode avantageux de l'invention, la semelle inférieure des deux semelles présente, entre la portion centrale et chacune des portions d'extrémité inclinées, une encoche, chacune desdites encoches étant fixée à la planche à talon par un cordon de soudure.

Avantageusement, le renfort a une épaisseur de paroi comprise entre 1 et 3mm, plus préférentiellement comprise entre 1.5 et 2.5mm.

Selon un mode avantageux de l'invention, ledit véhicule comprend des batteries de traction disposées à l'arrière de la planche à talon.

Avantageusement, la barre transversale de renfort est située à l'arrière des batteries de traction du véhicule et le profilé de renfort est situé à l'avant desdites batteries. La barre transversale peut également comprendre des éléments de fixation pour la fixation des batteries de traction du véhicule et/ou la fixation de réservoir à carburant. Préférentiellement, ces éléments de fixation sont des vis.

Les mesures de l'invention sont intéressantes en ce qu'elles renforcent la planche à talon en formant un renfort continu entre les profilés longitudinaux latéraux formant les bas de caisse. Elles permettent de limiter la déformation du véhicule lors d'un choc latéral et ainsi le risque de détérioration, voire d'explosion, des batteries. L'invention est particulièrement intéressante en ce qu'elle peut être facilement mise en œuvre sans aucune modification du design ou de la structure de base du véhicule. Elle peut également s'adapter facilement à différents types de véhicules. Elle est peu coûteuse et facile à produire.

D'autres caractéristiques et avantages de la présente invention seront mieux compris à l'aide de la description et des dessins parmi lesquels :
- La figure 1 est une vue de dessous de l'arrière d'un véhicule automobile conforme à l'invention et comprenant un profilé de renfort selon l'invention ;
- La figure 2 est une section du profilé de renfort sur la planche à talon, visible à la figure 1 ;
- La figure 3 est une vue de l'avant du profilé de renfort des figures 1 et 2 ;
- La figure 4 est une vue de dessous d'un véhicule automobile conforme à l'invention avec une barre transversale située à l'arrière de la planche à talon,
- La figure 5 est une vue en perspective et en coupe du plancher arrière du véhicule automobile des figures 1 et 4 comprenant le profilé de renfort et la barre transversale.

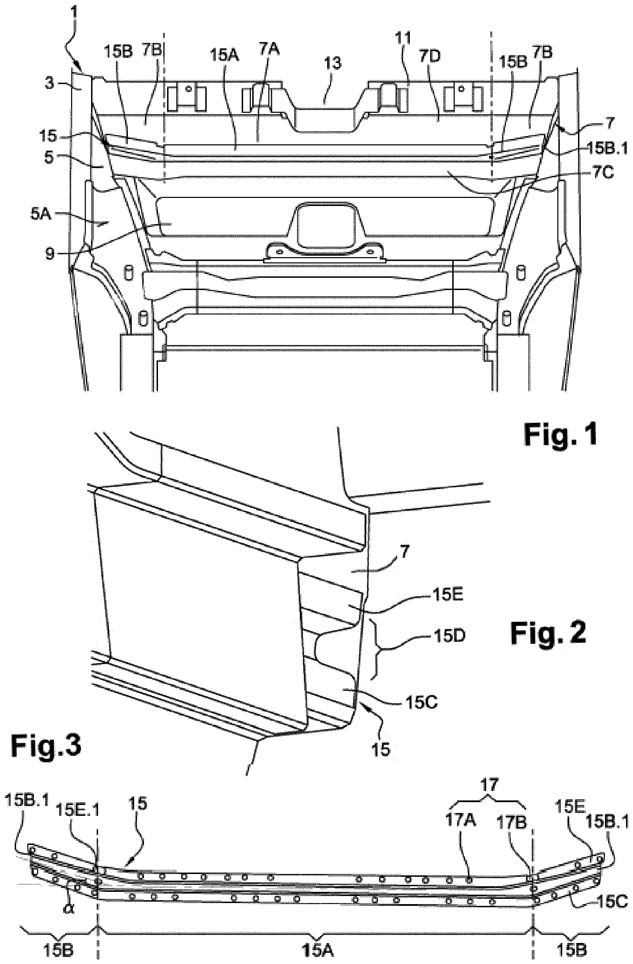

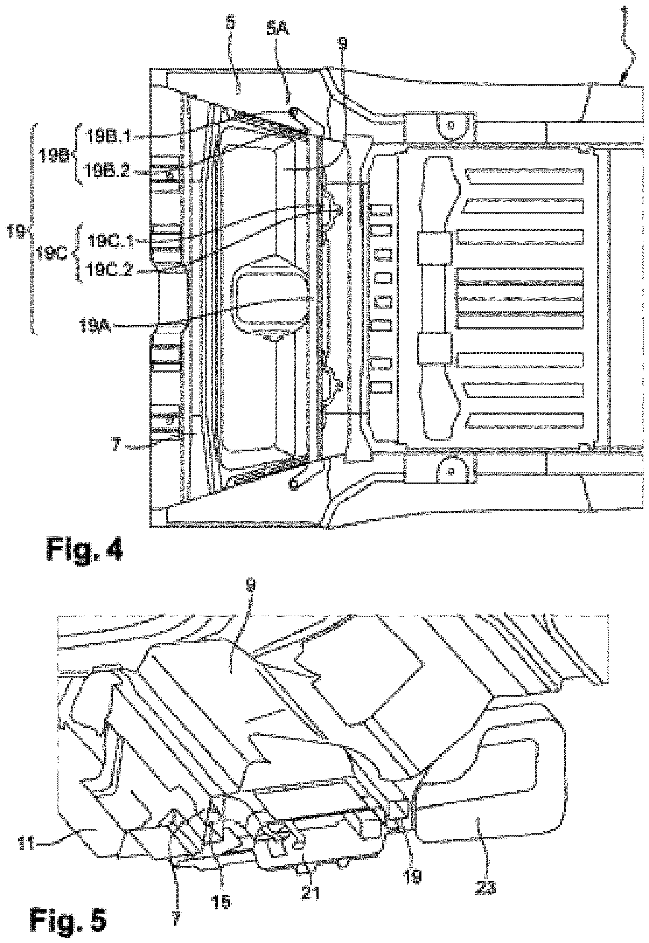

La figure 1 est une vue du dessous d'un véhicule automobile comprenant un profilé de renfort selon l'invention. Le véhicule automobile 1 comprend deux profilés longitudinaux latéraux 3 formant des bas de caisse positionnés de part et d'autre du plancher du véhicule 1. Ces profilés longitudinaux latéraux 3 se prolongent à l'arrière par deux longeronnets arrière 5 qui ont une face inférieure 5A servant à la fixation d'une barre transversale de renfort telle que décrite à la figure 4. Une planche à talon 7 s'étend entre les profilés longitudinaux latéraux 3, la planche à talon 7 servant de support à des sièges arrière (non visibles sur ces figures). Cette planche à talon 7 comprend une portion centrale 7A positionnée transversalement entre les profilés longitudinaux latéraux 3 et deux bords latéraux 7B s'étendant depuis la portion centrale 7A vers les longeronnets arrière 5. La planche à talon 7 comprend en outre un bord supérieur 7C en contact avec un plancher d'assise 9. Ce plancher d'assise 9 est positionné à l'arrière et en continuité de la planche à talon 7 et s'étend entre les longeronnets arrière 5. Enfin, la planche à talon 7 comprend un bord inférieur 7D en contact avec un plancher avant 11. Ce plancher avant 11, en continuité avec le bord inférieur 7D de la planche à talon 7, comprend un tunnel central 13 permettant notamment le passage sous le plancher du véhicule 1 de la ligne d'échappement du moteur à combustion. Une encoche centrale, positionnée sur le bord inférieur 7D de la planche à talon 7, est alignée au tunnel central 13 du plancher avant 11. Le profilé de renfort 15 selon l'invention est positionné sur la planche à talon 7, préférentiellement sur la face arrière de ladite planche, et épouse la forme de la planche à talon 7 sous-jacente.

Le profilé de renfort 15 comprend une portion centrale horizontale 15A positionnée transversalement au véhicule le long de la portion centrale 7A de la planche à talon 7, cette portion centrale 15A étant préférentiellement positionnée au-dessus de l'encoche du bord inférieur 7D de ladite planche à talon 7. Le profilé de renfort 15 comprend en outre deux portions d'extrémité 15B qui sont positionnées le long des bords latéraux 7B de la planche à talon 7. Ces portions d'extrémité 15B ont en outre une extrémité libre 15B.1 située en vis-à-vis des longeronnets arrière 5, verticalement à une position médiane dudit longeronnet 5.

La figure 2 montre une section du profilé de renfort de la figure 1. Le profilé de renfort 15 étant préférentiellement une tôle métallique, et plus préférentiellement en acier, la section dudit profilé de renfort 15 présente une semelle supérieure 15C, une portion creuse 15D médiane et une semelle inférieure 15E. Les semelles supérieure 15C et inférieure 15E servent à la fixation du profilé de renfort 15 sur la planche à talon 7. La section du profilé de renfort 15 comprend préférentiellement une seule portion creuse 15D orientée vers la planche à talon 7.

La figure 3 montre une vue de l'avant du profilé de renfort de la figure 1. Sur cette figure, les portions d'extrémité 15B sont inclinées vers le bas par rapport à la portion centrale 15A selon un angle α compris entre 10° et 30°, et plus préférentiellement compris entre 15° et 25°. La figure 3 montre également le positionnement des éléments de fixation du profilé de renfort 15 sur la planche à talon, ces éléments de fixation étant préférentiellement des soudures 17. Ces soudures 17 sont plus préférentiellement de deux types : des soudures par points 17A (ou soudures PSE, acronyme de Point de Soudure Electrique) positionnées régulièrement sur les deux semelles (15E, 15C) et sur la planche à talon correspondante, et des soudures par cordons de soudure 17B. Les cordons de soudures 17B sont au nombre de deux et positionnés dans des encoches 15E.1 prévues à cet effet au niveau de la semelle inférieure 15E, lesdites encoches 15E.1 étant positionnées entre les portions d'extrémité 15B et la portion centrale 15A du renfort 15.

La figure 4 est une vue de dessous du véhicule automobile avec la barre transversale de renfort selon l'invention. Cette barre transversale 19 peut être ajoutée au profilé de renfort afin d'améliorer la résistance de la planche à talon 7 en cas de choc latéral. Elle permet plus spécifiquement de mieux répartir les efforts produits lors d'un choc latéral au côté opposé dudit choc. La barre transversale de renfort 19 est positionnée à l'arrière et à distance de la planche à talon 7. Cette barre transversale 19 comprend un profilé rectiligne 19A positionné transversalement à la direction longitudinale du véhicule 1, et deux pattes de fixation 19B. Le profilé rectiligne 19A de la barre transversale de renfort 19 a préférentiellement une section trapézoïdale. Chacune des pattes de fixation 19B comprend une extrémité antérieure 19B.1 qui va être soudée au profilé rectiligne 19A, et une extrémité postérieure 19B.2, ladite extrémité postérieure 19B.2 présentant une ouverture servant à la fixation de la barre transversale de renfort 19 sur la face inférieure 5A du longeronnet 5. La barre transversale de renfort 19 comprend en outre au moins deux pièces de soutien 19C. Les pièces de soutien 19C ont une portion centrale 19C.1 et des pattes de fixation 19C.2. La portion centrale 19C.1 soutien la barre transversale 19 contre le plancher d'assise 9 sous-jacent, lesdites pièces de soutien 19C étant maintenues sur le plancher 9 par les pattes de fixation 19C.2. Les pièces de soutien 19C et la barre transversale de renfort 19 peuvent également être maintenues ensemble par des moyens de fixation, comme par des éléments de soudure ou par des vis.

La figure 5 est une vue en perspective du dessous du véhicule automobile des figures 1 et 4 comprenant le profilé de renfort et la barre transversale de renfort. Le plancher avant 11 est positionné dans la partie gauche de la figure. Celui-ci est prolongé verticalement à l'arrière par la planche à talon 7 puis par le plancher d'assise 9 sur la droite de la figure 5. Des batteries de traction 21 sont positionnées à l'arrière de la planche à talon 7, ces batteries 21 étant utilisées dans les véhicules hybrides et/ou électriques. Le profilé de renfort 15 est positionné entre les batteries de traction 21 et la planche à talon 7. Cette figure montre également le positionnement de la barre transversale de renfort 19 qui est située à l'arrière des batteries de traction 21 mais à l'avant des réservoirs à carburant 23. Les batteries de traction 21 sont fixées à l'arrière sur la barre transversale de renfort 19, fixation préférentiellement réalisée au moyen de vis. Le ou les réservoirs à carburant 23 ont également des moyens de fixation à la barre transversale 19, lesdits moyens de fixation étant positionnés à l'avant des réservoirs à carburant 23 et étant préférentiellement des vis.

De manière générale, le profilé de renfort 15 ou la barre transversale de renfort 19 ont préférentiellement une épaisseur comprise entre 1 et 3mm, plus préférentiellement entre 1.5 et 2.5mm.

## Revendications

1. Véhicule automobile (1) comprenant :
- une planche à talon (7) s'étendant transversalement entre deux profilés longitudinaux latéraux (3) formant des bas de caisse ; et
- un profilé de renfort (15) disposé transversalement sur la planche à talon (7) ;
- deux longeronnets arrière (5) s'étendant chacun vers l'avant le long d'un des profilés longitudinaux latéraux (3) au-delà de la planche à talon (7)
le profilé de renfort (15) comprenant une portion centrale horizontale (15A) et deux portions d'extrémité (15B) inclinées vers le bas par rapport à ladite portion centrale (15A), chacune des portions d'extrémité (15B) du profilé de renfort (15) présente une extrémité libre (15B.1) située en vis-à-vis d'un des longeronnets (5), verticalement à une position médiane dudit longeronnet (5), **caractérisé en ce que** le véhicule (1) comprend, en outre, une barre transversale de renfort (19) fixée aux longeronnets (5) et située à l'arrière de la planche à talon (7).

2. Véhicule automobile (1) selon la revendication 1, **caractérisé en ce que** chacune des deux portions d'extrémité (15B) est inclinée par rapport à la portion centrale (15A) d'un angle α supérieur à 10° et/ou inférieur à 30°.

3. Véhicule automobile (1) selon l'une des revendications 1 ou 2, **caractérisé en ce que** la barre transversale (19) comprend un profilé rectiligne (19A) de section fermée et deux pattes de fixation (19B) aux extrémités dudit profilé (19A), chacune desdites pattes (19B) étant fixée sur une face inférieure (5A) d'un des longeronnets (5).

4. Véhicule automobile (1) selon l'une des revendications 1 à 3, **caractérisé en ce que** la planche à talon (7) présente une encoche alignée avec un tunnel central (13), la portion centrale horizontale (15A) du profilé de renfort (15) s'étendant au-dessus de ladite encoche.

5. Véhicule automobile (1) selon l'une des revendications 1 à 4, **caractérisé en ce que** la section transversale du profilé de renfort (15) comprend une portion creuse (15D) et deux semelles (15C, 15E) de part et d'autre de ladite portion (15D), lesdites semelles (15C, 15E) étant fixés par soudure à la planche à talon (7).

6. Véhicule automobile (1) selon la revendication 5, **caractérisé en ce que** la semelle inférieure (15E) des deux semelles (15C, 15E) présente, entre la portion centrale (15A) et chacune des portions d'extrémité (15B) inclinées, une encoche (15E.1), chacune desdites encoches (15E.1) étant fixée à la planche à talon (7) par un cordon de soudure (17B).

7. Véhicule automobile (1) selon l'une des revendications 1 à 6, **caractérisé en ce que** ledit véhicule (1) comprend des batteries de traction (21) disposées à l'arrière de la planche à talon (7).

## Patentansprüche

1. Kraftfahrzeug (1) mit:
- ein Wulstbrett (7), das sich quer zwischen zwei seitlichen Längsprofilen (3) erstreckt, die Auflaufsohlen bilden; und
- ein quer auf dem Fersenbrett (7) angeordnetes Verstärkungsprofil (15);
- zwei hintere Längsträger (5), die sich jeweils nach vorn entlang eines der seitlichen Längsprofile (3) über das Fersenbrett (7) hinaus erstrecken
Das Verstärkungsprofil (15) umfasst einen horizontalen Mittelabschnitt (15A) und zwei Endabschnitte (15B), die nach unten in Bezug auf den Mittelabschnitt (15A) geneigt sind, wobei jeder der Endabschnitte (15B) des Verstärkungsprofils (15) ein freies Ende (15B.1) aufweist, das einem der Längsträger gegenüberliegt Keile (5), vertikal in einer mittleren Position des Längsträgers (5), **dadurch gekennzeichnet, dass** das Fahrzeug (1) ferner eine Querverstärkungsstange (19) aufweist, die an den Längsträgern (5) befestigt ist und hinter dem Fersenbrett (7) angeordnet ist.

2. Kraftfahrzeug (1) nach Anspruch 1, **dadurch gekennzeichnet, dass** jeder der beiden Endabschnitte (15B) in einem Winkel von mehr als 10° und/oder weniger als 30° gegenüber dem Mittelabschnitt (15A) geneigt ista

3. Kraftfahrzeug (1) nach einem der Ansprüche 1 oder 2, **dadurch gekennzeichnet, dass** der Querträger (19) ein geradliniges Profil (19A) mit geschlossenem Querschnitt und zwei Befestigungslaschen (19B) an den Enden des Profils (19A) umfasst, wobei jede der Laschen (19B) an einer Unterseite (5A) eines der Längsträger (5) befestigt ist ...

4. Kraftfahrzeug (1) nach einem der Ansprüche 1 bis 3, **dadurch gekennzeichnet, dass** das Wulstbrett (7) eine Kerbe aufweist, die mit einem Mitteltunnel (13) ausgerichtet ist, wobei sich der horizontale Mittelabschnitt (15A) des Verstärkungsprofils (15) über die Kerbe erstreckt.

5. Kraftfahrzeug (1) nach einem der Ansprüche 1 bis 4, **dadurch gekennzeichnet, dass** der Querschnitt des Verstärkungsprofils (15) einen hohlen Abschnitt (15D) und zwei Sohlen (15C, 15E) auf beiden Seiten des Abschnitts (15D) umfasst, wobei die Sohlen (15C, 15E) an der ebenen Schweißnaht befestigt sind Fersenche (7)

6. Kraftfahrzeug (1) nach Anspruch 5, **dadurch gekennzeichnet, dass** die untere Sohle (15E) der beiden Sohlen (15C, 15E) zwischen dem mittleren Abschnitt (15A) und jedem der geneigten Endabschnitte (15B) eine Kerbe (15E.1) aufweist, wobei jede der Kerben (15E.1) befestigt ist am Fersenbrett (7) durch eine Schweißnaht (17B).

7. Kraftfahrzeug (1) nach einem der Ansprüche 1 bis 6, **dadurch gekennzeichnet, dass** das Fahrzeug (1) Zugbatterien (21) aufweist, die hinter dem Fersenbrett (7) angeordnet sind.

## Claims

1. Motor vehicle (1) comprising:
- a heel board (7) extending horizontally between two lateral longitudinal profiles (3) forming bottom bodies; and
- a reinforcement profile (15) arranged across the heel board (7);
- two rear straps (5) each extending forward along one of the lateral longitudinal profiles (3) beyond the heel board (7)
the reinforcement profile (15) consisting of a horizontal central portion (15A) and two end portions (15B) inclined downward from that central portion (15A), each of the end portions (15B) of the reinforcement profile (15) has a free end (15B.1) facing one of the lengths coats (5), vertically at a median position of the said longeronnet (5), **characterized by** the fact that the vehicle (1) also includes a cross-bar of reinforcement (19) attached to the longeronets (5) and located at the rear of the heel board (7).

2. Motor vehicle (1) according to claim 1, characterized as each of the two ends (15B) is inclined to the center (15A) portion of an angle higher than 10° and/or less than 30°.

3. Motor vehicle (1) according to one of the claims 1 or 2, characterized as the transverse bar (19) includes a straight profile (19A) of closed section and two fixing legs (19B) at the ends of the said profile (19A), each of the said legs (19B) being fixed on a lower face (5A) of one of the longeronets (5).

4. Motor vehicle (1) in accordance with one of the claims 1 to 3, **characterized by** the stub board (7) having a notch aligned with a central tunnel (13), with the horizontal center portion (15A) of the reinforcement profile (15) extending over the said notch.

5. Motor vehicle (1) according to one of the claims 1 to 4, characterized as the cross section of the reinforcement profile (15) consists of a hollow portion (15D) and two soles (15C, 15E) on either side of the said portion (15D), the said soles (15C, 15E) being fixed by welding to the board heel (7).

6. Motor vehicle (1) according to claim 5, **characterized by** the lower sole (15E) of the two soles (15C, 15E) having, between the center portion (15A) and each of the sloped end portions (15B), a notch (15E.1), each of the said notches (15E.1) being attached to the board on (7) by a weld cord (17B).

7. Motor vehicle (1) in accordance with one of the claims 1 to 6, **characterized by** the fact that the said vehicle (1) includes traction batteries (21) placed at the rear of the heel board (7).
